# EUROPEAN PATENT APPLICATION

(11) **EP 4 715 246 A1**
(43) Date of publication of application: **25.03.2026**
(21) Application number: 24825276.9
(22) Date of filing: 19.06.2024
(51) Int. Cl.: F16K 31/06

(54) **SOLENOID VALVE**

(30) Priority: 19.06.2023 CN 202321572335 U; 10.08.2023 CN 202322153241 U; 10.08.2023 CN 202322153252 U; 10.08.2023 CN 202322161103 U; 10.08.2023 CN 202322165781 U; 10.08.2023 CN 202322158470 U; 10.08.2023 CN 202322155411 U; 10.08.2023 CN 202322155812 U
(71) Applicant: Zhejiang Dunan Artificial Environment Co., Ltd., Shaoxing Zhejiang 311835 (CN)
(72) Inventor: YIN, Mo, Shaoxing, Zhejiang 311835 (CN); WANG, Fugang, Shaoxing, Zhejiang 311835 (CN); JIN, Yong, Shaoxing, Zhejiang 311835 (CN)
(74) Representative: Zacco GmbH
(86) International application number: PCT/CN2024/100218
(87) International publication number: WO 2024/260388

(57) **Abstract**

A solenoid valve, including: a housing assembly (10), an installation cavity (11) being provided in the housing assembly; wherein the housing assembly has a first flow port (12), a second flow port (13), and a main valve port (17) located between the first flow port and the second flow port; and an on-off assembly (20), movably provided in the installation cavity; wherein the on-off assembly is used for controlling opening or closing of the main valve port, so as to realize connection and disconnection between the first flow port and the second flow port. The solenoid valve is in communication with the first flow port by providing the installation cavity, thereby avoiding a problem of a relatively large pressure difference between the first flow port or the second flow port with respect to the installation cavity inside the solenoid valve, further ensuring the smoothness and reliability of opening or closing of the solenoid valve, and avoiding a problem of failure of the solenoid valve, such that the solenoid valve has a simple overall structure, and is convenient to install and maintain.

## Description

The present disclosure claims priority to patent application no. 202321572335.1, entitled "Solenoid Valve", and filed to the China National Intellectual Property Administration on June 19, 2023;
the present disclosure further claims priority to patent application no. 202322153241.7, entitled "Solenoid Valve", and filed to the China National Intellectual Property Administration on August 10, 2023;
the present disclosure further claims priority to patent application no. 202322153252.5, entitled "Solenoid Valve", and filed to the China National Intellectual Property Administration on August 10, 2023;
the present disclosure further claims priority to patent application no. 202322161103.3, entitled "Solenoid Valve", and filed to the China National Intellectual Property Administration on August 10, 2023;
the present disclosure further claims priority to patent application no. 202322165781.7, entitled "Solenoid Valve", and filed to the China National Intellectual Property Administration on August 10, 2023;
the present disclosure further claims priority to patent application no. 202322158470.8, entitled "Solenoid Valve", and filed to the China National Intellectual Property Administration on August 10, 2023;
the present disclosure further claims priority to patent application no. 202322155411.5, entitled "Solenoid Valve", and filed to the China National Intellectual Property Administration on August 10, 2023; and
the present disclosure further claims priority to patent application no. 202322155812.0, entitled "Solenoid Valve", and filed to the China National Intellectual Property Administration on August 10, 2023.

### Technical Field

The present disclosure relates to the technical field of solenoid valves, and in particular, to a solenoid valve.

### Background

Currently, in existing solenoid valves, due to a relatively large spacing between a movable iron core and a static iron core of the solenoid valve, when the movable iron core and the static iron core are attracted, the movable iron core has a relatively large speed, which easily generates a relatively large collision noise, and easily causes collision damage to the movable iron core and the static iron core.

An existing pilot-operated solenoid valve generally uses a stationary static iron core and a movable iron core that moves vertically along an axial direction, and a pilot valve port of a piston is opened or blocked by the movable iron core, such that the piston opens or closes a main valve port. For example, Chinese patent of publication no. CN207034187U includes a main valve body, a piston assembly, a valve cover assembly, and a coil assembly; wherein the main valve body is provided with an inlet, an outlet, a valve cavity communicating the inlet and the outlet, and a connection port in communication with the valve cavity; the valve cover assembly includes a valve cover and a sleeve, the valve cover is connected to the connection port; the piston assembly includes a first piston for opening or closing a valve port, the first piston is provided with a first pilot valve port and a first balancing hole which are axially through the first piston, and the first piston is connected to a first piston spring which enables the first piston to get away from the valve port; and the piston assembly further includes a second piston for opening and closing the first pilot valve port, and the second piston is provided with a second pilot valve port and a second balancing hole which are axially through the second piston, and the second piston is connected to a second piston spring which enables the second piston to get away from the first pilot valve port. For another example, in CN207034187U, after de-energization, the first piston closes the valve port. After energization, an iron core rises for the first time to open the second pilot valve port, then the iron core and the first piston rise again synchronously until the iron core is attracted with an attractor, and the first piston opens the valve port. A height of the first rise of the iron core is defined as an opening degree of the second pilot valve port, and a height of the second rise of the iron core is defined as an opening degree of the first piston. Therefore, in the de-energization state, a distance between the iron core and the attractor is the sum of the opening degree of the second pilot valve port and the opening degree of the first piston. The distance between the iron core and the attractor is relatively large, the speed of the iron core when moving to be attracted with the attractor is relatively large, and the iron core collides with the attractor at a relatively large speed, thereby generating large noise. The solenoid valve mentioned above is a normally-closed valve, and usual operating state thereof is closed (for example: when the coil assembly is energized, the movable iron core moves by a certain distance to open the pilot valve port, and then the movable iron core continues to move by a certain distance, i.e. a movement distance of the piston opening the main valve port).

### Summary

Some embodiments of the present disclosure provide a solenoid valve, for solving the problems occurring in solenoid valves in the related art that due to a relatively large spacing between a movable iron core and a static iron core of the solenoid valve, when the movable iron core and the static iron core are attracted, the movable iron core has a relatively large speed, which easily generates a relatively large collision noise, and easily causes collision damage to the movable iron core and the static iron core.

In order to solve the described problems, some embodiments of the present disclosure provide a solenoid valve, including: a housing assembly, an installation cavity being provided in the housing assembly; wherein the housing assembly has a first flow port, a second flow port, and a main valve port located between the first flow port and the second flow port; an on-off assembly, movably provided in the installation cavity; wherein the on-off assembly is used for controlling opening or closing of the main valve port, so as to realize connection and disconnection between the first flow port and the second flow port; an upper iron core, movably provided in the installation cavity; a lower iron core, movably provided in the installation cavity and located below the upper iron core; wherein the on-off assembly is located below the lower iron core; the on-off assembly has a through intermediate channel; an end of the intermediate channel is in communication with the first flow port, and an other end of the intermediate channel is the pilot valve port; and the lower iron core is used for controlling opening and closing of a pilot valve port, so as to control a pressure difference between an upper part and a lower part of the on-off assembly; and a lower push rod, movably provided in the installation cavity; wherein an end of the lower push rod is in abutting fit with the upper iron core, and an other end of the lower push rod is in abutting fit with the on-off assembly; and an elastic member and an upper push rod; wherein an end of the elastic member abuts against the housing assembly, an other end of the elastic member abuts against an end of the upper push rod, and an other end of the upper push rod abuts against the lower iron core; and a farthest distance between the lower iron core and the pilot valve port is an opening degree of the pilot valve port, and a maximum spacing between the upper iron core and the lower iron core is equal to the opening degree of the pilot valve port.

Further, the lower iron core is provided with a constraint channel, and an inner wall of the constraint channel is matched with the lower push rod, so as to constrain the lower push rod to a reciprocating linear motion in a vertical direction; the lower iron core is elastically arranged in the installation cavity by the elastic member and the upper push rod; a guide cavity extending axially is provided inside the upper iron core; and both at least a part of the elastic member and at least a part of the upper push rod are located in the guide cavity, and the upper push rod is in limiting fit with an inner wall of the guide cavity.

Further, the housing assembly includes a valve seat and a valve cover, wherein the first flow port, the second flow port and the main valve port are all provided on the valve seat; and an interior of the valve seat and an interior of the valve cover forms at least a part of the installation cavity; wherein the valve cover is detachably connected to the valve seat by threads; and the valve seat has a force-receiving surface, and the force-receiving surface abuts against the valve cover; and a pressure generated by a threaded connection force between the valve cover and the valve seat on the force-receiving surface lies within a pressure range born by the force-receiving surface.

Further, an annular constraint groove is provided in a circumferential direction of a side wall of the valve cover; or an annular constraint groove is provided in a circumferential direction of a side wall of the valve seat; and the solenoid valve further includes an annular sealing ring, wherein the annular sealing ring is provided in the annular constraint groove and is in limiting fit with the annular sealing ring, and the annular sealing ring is matched with an inner wall of the valve seat so as to seal the installation cavity.

Further, the valve seat is further provided with a positioning groove, the positioning groove surrounds a circumferential direction of the main valve port; and the solenoid valve further includes a buffer spring, an end of the buffer spring is arranged in the positioning groove and is in limiting fit with the positioning groove, and an other end of the buffer spring abuts against the on-off assembly so as to buffer an impact of the on-off assembly on the valve seat.

Further, the solenoid valve further includes an installation seat, wherein the installation seat is detachably connected to the valve seat by threads; a valve seat cavity is provided inside the valve seat, and the first flow port, the second flow port and the main valve port are respectively in communication with the valve seat cavity; a cavity, and a first flow channel and a second flow channel which are respectively in communication with the cavity are provided inside the installation seat; a threaded mating section is provided in a middle of the valve seat, and the threaded mating section is in threaded connection with an inner wall of the cavity; a limiting surface is provided inside the cavity, and the limiting surface abuts against the valve seat to axially limit the valve seat; and the first flow channel is in communication with the second flow port, and the second flow channel is in communication with the first flow port.

Further, the housing assembly includes a sleeve and a valve cover, and interiors of the sleeve and the valve cover form at least a part of the installation cavity; wherein an end of the sleeve is fixed on the valve cover by laser welding.

Further, a part of the sleeve connected to the valve cover is of a flared structure, the flared structure includes a frustoconical curved section and a straight section connected to each other, an opening size of an end of the frustoconical curved section towards the main valve port is greater than an opening size of an end of the frustoconical curved section away from the main valve port, and the straight section is connected to the end of the frustoconical curved section having a larger opening size; an inner wall of the valve cover is provided with a frustoconical mating section, and a frustoconical curved surface on the frustoconical curved section is in abutting fit with a frustoconical fit surface of the frustoconical mating section; and the straight section and the valve cover are welded in a laser penetration welding manner.

Further, the solenoid valve further includes an elastic gasket, an end of the lower iron core close to the upper push rod is provided with a constraint groove, at least a part of the elastic gasket is arranged in the constraint groove and is in limiting fit with the constraint groove; and a minimum axial size of the elastic gasket is not greater than an axial size of the constraint groove, such that the upper iron core and the lower iron core can be attached together.

Further, the elastic gasket is sleeved on a circumferential outer wall of the upper push rod; the elastic gasket is a disc spring; and the disc spring is made of a metal material.

Further, the solenoid valve further includes a rubber gasket, and the rubber gasket is provided between the upper iron core and an inner wall of the installation cavity, so as to buffer an impact of the upper iron core on the inner wall of the installation cavity.

Further, a guide cavity extending axially and a fit hole in communication with the guide cavity are provided inside the upper iron core; the upper push rod includes a guide section and a mating section which are connected in sequence, wherein the guide section is arranged in the guide cavity and is in guide fit with an inner wall of the guide cavity; the elastic member is located in the guide cavity, an end of the elastic member abuts against the housing assembly, and an other end of the elastic member abuts against the guide section; a part of the mating section is located in the guide cavity, and an other part extends out of the fit hole and then abuts against the lower iron core; and a gap between the guide section and the inner wall of the guide cavity is smaller than a gap between the mating section and an inner wall of the fit hole.

Further, the housing assembly includes a sleeve; an interior of the sleeve is used for accommodating at least a part of the upper iron core and at least a part of the lower iron core; a flow channel in communication with the guide cavity is further provided inside the upper iron core; the flow channel and the mating section are respectively located at two sides of the guide section; and the guide cavity of the upper iron core is in communication with a gap between the upper iron core and the sleeve through the flow channel.

Further, the on-off assembly includes a piston body and a pilot valve block fixedly provided on the piston body; the pilot valve port is provided on the pilot valve block, and at least a part of the intermediate channel is provided in the piston body; the solenoid valve further includes a check valve; the check valve is movably provided in the intermediate channel; and the pilot valve block is fixed on the piston body by welding.

Further, the pilot valve block is fixed on a top end face of the piston body by welding; or, a pilot valve groove is provided on a top end face of the piston body, and the pilot valve block is fixed in the pilot valve groove by welding and is in limiting fit with an inner wall of the pilot valve groove.

Further, the intermediate channel includes a piston channel provided in the piston body and a guide channel provided in the pilot valve block; the check valve is located in the piston channel, the check valve blocks a lower opening of the guide channel, and an upper opening of the guide channel is the pilot valve port; and at least a part of the pilot valve block is located in the piston channel, and an outer wall of the pilot valve block and an inner wall of the piston channel are fixed by welding.

Further, the intermediate channel includes a piston channel provided in the piston body and a guide channel provided in the pilot valve block; the check valve is internally provided with a first flow section and a second flow section in communication with each other in sequence from bottom to top, a radial size of the first flow section is greater than a radial size of the second flow section, a side surface of the second flow section is provided with a through hole, and the through hole achieves communication between the second flow section and the piston channel; and a wall thickness of the first flow section is equal to a wall thickness of the second flow section.

Further, an inner wall of the piston channel is provided with a step surface, and the step surface is used for limiting an axial movement of the check valve; the check valve includes, from bottom to top, a first cylindrical portion, a second cylindrical portion and a frustoconical portion which are sequentially connected, in which the first flow section is located inside the first cylindrical portion, the second flow section is located inside the second cylindrical portion; the through hole passes through the second cylindrical portion; the first cylindrical portion can be in abutting fit with the step surface; and the frustoconical portion abuts against or separates from a lower opening of the guide channel so as to open or close the pilot valve port.

Further, the pilot valve block includes an insertion section fitting the piston body and a pilot valve section internally provided with the pilot valve port, and a diameter of the insertion section is larger than a diameter of the pilot valve section.

Further, the on-off assembly includes a piston body and a pilot valve block provided on the piston body; the intermediate channel includes a piston channel provided in the piston body and a guide channel provided in the pilot valve block; an upper opening of the guide channel is the valve guide port; and the piston channel is in communication with the first flow port; the piston body includes a first cylindrical section connected to the pilot valve block, wherein the first cylindrical section moves axially along an inner wall of the installation cavity; and an installation channel in communication with the guide channel is provided inside the first cylindrical section, and the installation channel is a part of the piston channel; the solenoid valve further includes a check valve, wherein at least a part of the check valve is movably provided in the installation channel, the check valve is used for blocking an opening of the guide channel below the valve guide port; and the pilot valve block is fixed on the piston body by threaded connection.

Further, at least a part of the pilot valve block is located in the installation channel, and the check valve is located outside the guide channel; or, at least a part of the guide valve block is located in the installation channel, and the check valve is located in the guide channel; and a part of the pilot valve block located in the installation channel is in threaded connection with an inner wall of the installation channel.

Further, the pilot valve block includes an insertion section, a limiting section and a pilot valve section which are sequentially connected, wherein the limiting section is located outside the piston body; the insertion section is located in the piston body and is in threaded fit with an inner wall of the piston channel; the guide channel passes through the insertion section, the limiting section and the pilot valve section, and the pilot valve port is located on the pilot valve section; and an outer wall of the limiting section abuts against an outer wall of the piston body in an axial direction so as to achieve axial limiting;
Further, a sharp corner structure is provided on the outer wall of the limiting section, and the sharp corner structure is in abutting fit with the outer wall of the piston body.

By applying the technical solutions of the present disclosure, the present disclosure provides a solenoid valve, including: a housing assembly, an installation cavity being provided in the housing assembly; wherein the housing assembly has a first flow port, a second flow port, and a main valve port located between the first flow port and the second flow port; an on-off assembly, movably provided in the installation cavity; wherein the on-off assembly is used for controlling opening or closing of the main valve port, so as to realize connection and disconnection between the first flow port and the second flow port; an upper iron core, movably provided in the installation cavity; a lower iron core, movably provided in the installation cavity and located below the upper iron core; wherein the on-off assembly is located below the lower iron core; the on-off assembly has a through intermediate channel; an end of the intermediate channel is in communication with the first flow port, and an other end of the intermediate channel is a pilot valve port; and the lower iron core is used for controlling opening and closing of the pilot valve port, so as to control a pressure difference between an upper part and a lower part of the on-off assembly; and a lower push rod, movably provided in the installation cavity; wherein an end of the lower push rod is in abutting fit with the upper iron core, and an other end of the lower push rod is in abutting fit with the on-off assembly; and an elastic member and an upper push rod; wherein an end of the elastic member abuts against the housing assembly, an other end of the elastic member abuts against an end of the upper push rod, and an other end of the upper push rod abuts against the lower iron core; and a farthest distance between the lower iron core and the pilot valve port is an opening degree of the pilot valve port, and a maximum spacing between the upper iron core and the lower iron core is equal to the opening degree of the pilot valve port. In the present disclosure, the maximum spacing between the upper iron core and the lower iron core is set to be equal to the opening degree of the pilot valve port (that is, the maximum spacing between the upper iron core and the lower iron core is equal to the opening degree of the pilot valve port), the spacing between the upper iron core and the lower iron core is effectively reduced, thereby reducing a moving speed of the lower iron core when the lower iron core is attracted to the upper iron core, reducing a collision noise between the lower iron core and the upper iron core caused by attraction, and reducing damage caused by collision to the lower iron core and the upper iron core. The solenoid valve in the present disclosure may be a normally-closed valve, and usual operating state thereof is closed (for example: when a coil assembly is energized, a movable iron core moves by a certain distance to open the pilot valve port, and then the movable iron core continues to move by a certain distance, i.e. a movement distance of a piston opening the main valve port). Obviously, the technical solution of the present disclosure is also applicable to normally-open valves, and has good applicability. The present disclosure achieves a simple structure, and facilitates installation and maintenance.

### Brief Description of the Drawings

The drawings of the description, constituting a part of the present disclosure, are used for providing further understanding of the present disclosure, and the illustrative embodiments of the present disclosure and illustrations thereof are used for explaining the present disclosure, rather than constitute inappropriate limitation on the present disclosure. In the drawings:
Fig. 1 shows a full section view of a partial structure of a solenoid valve provided according to an embodiment of the present disclosure;
Fig. 2 shows a full section view of a partial structure of the solenoid valve of Fig. 1 at another angle;
Fig. 3 shows a full section view of a partial structure of a solenoid valve provided according to an other embodiment of the present disclosure;
Fig. 4 shows a full section view of a partial structure of the solenoid valve of Fig. 3 at another angle;
Fig. 5 shows a schematic diagram of an internal structure of a check valve provided according to an embodiment of the present disclosure;
Fig. 6 shows a schematic diagram of an external structure of a check valve provided according to an embodiment of the present disclosure;
Fig. 7 shows a schematic diagram of an external structure of a lower iron core provided according to an embodiment of the present disclosure;
Fig. 8 shows a schematic diagram of an internal structure of a lower iron core provided according to an embodiment of the present disclosure;
Fig. 9 shows a schematic diagram of an external structure of a valve seat provided according to an embodiment of the present disclosure;
Fig. 10 shows a schematic diagram of an internal structure of a valve seat provided according to an embodiment of the present disclosure;
Fig. 11 shows a schematic diagram of an internal structure of a valve cover provided according to an embodiment of the present disclosure;
Fig. 12 shows a schematic diagram of an external structure of a solenoid valve including an installation seat provided according to an embodiment of the present disclosure;
Fig. 13 shows a schematic diagram of an internal structure of a solenoid valve including an installation seat provided according to an embodiment of the present disclosure;
Fig. 14 shows a schematic diagram of an internal structure of an installation seat provided according to an embodiment of the present disclosure;
Fig. 15 shows a schematic diagram of fitting between a valve cover and a sleeve provided according to an embodiment of the present disclosure;
Fig. 16 shows a schematic diagram of fitting between an on-off assembly and a check valve provided according to an embodiment of the present disclosure; and
Fig. 17 shows a full section view of a partial structure of a solenoid valve provided according to a tenth embodiment of the present disclosure.

The figures above include the following reference signs:
10. housing assembly; 11. installation cavity; 12. first flow port; 13. second flow port; 14. valve seat; 141. force-receiving surface; 142. valve seat cavity; 143. circumferential groove; 144. threaded mating section; 15. valve cover; 151. annular constraint groove; 152. frustoconical fit surface; 16. sleeve; 161. frustoconical curved surface; 162. straight section; 163. frustoconical curved section; 17. main valve port;
20. on-off assembly; 21. intermediate channel; 22. pilot valve port; 23. piston body; 231. piston channel; 232. pilot valve groove; 233. diameter-reduced section; 234. second cylindrical section; 235. first cylindrical section; 24. pilot valve block; 241. insertion section; 242. limiting section; 243. guide channel; 244. pilot valve section; 25. voltage stabilizing channel; 26. sealing block; 27. installation groove; 271. annular micro-groove; 272. pressure relief channel; 28. positioning protrusion; 29. annular limiting piece;
30. coil assembly;
40. upper iron core; 41. guide cavity; 42. fit hole; 43. flow channel;
50. lower iron core; 51. constraint groove; 52. lower iron core; 521. anti-flash evaporation channel; 53. sealing member; 54. constraint channel; 55. push rod constraint hole;
60. lower push rod;
70. first sealing ring;
80. elastic member;
90. upper push rod; 91. guide section; 92. mating section;
100. elastic gasket;
110. piston ring;
120. check valve; 121. first flow section; 122. second flow section; 123. through hole; 124. first cylindrical portion; 125. second cylindrical portion; 126. frustoconical portion; 127. chamfer structure;
130. annular sealing ring;
140. installation seat; 1401. cavity; 1402. first flow channel; 1403. second flow channel; 1404. limiting surface;
150. o-shaped ring.

### Detailed Description of the Embodiments

The technical solutions in embodiments of the present disclosure will be clearly and completely described below with reference to the accompanying drawings in the embodiments of the present disclosure. Obviously, the embodiments as described are only parts of embodiments rather than all the embodiments of the present disclosure. The following description of at least one exemplary embodiment is merely illustrative in nature, and is in no way intended to limit the present disclosure and any applications or uses thereof. All other embodiments obtained by a person of ordinary skill in the art on the basis of the embodiments of the present disclosure without involving any inventive effort shall all fall within the scope of protection of the present disclosure.

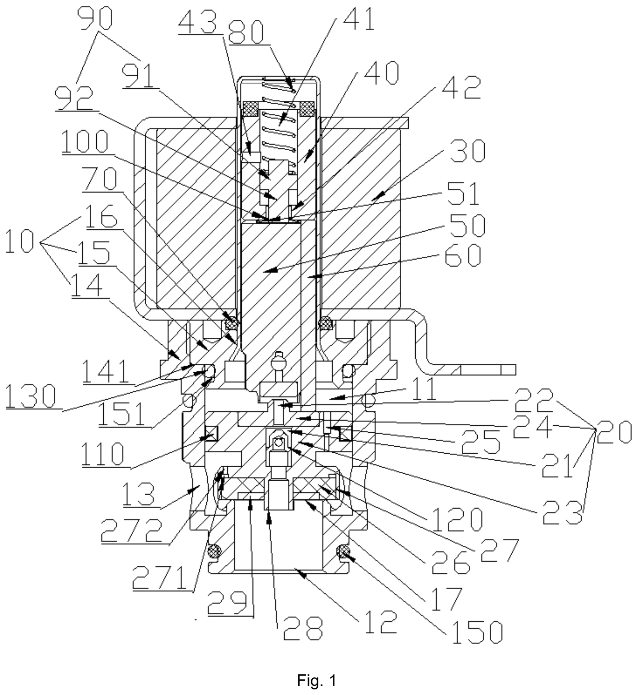

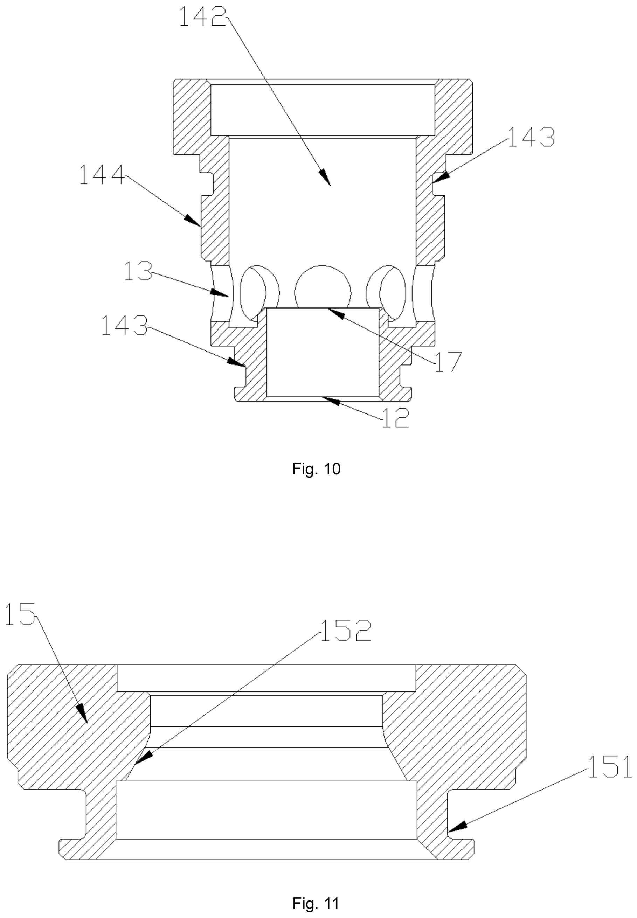

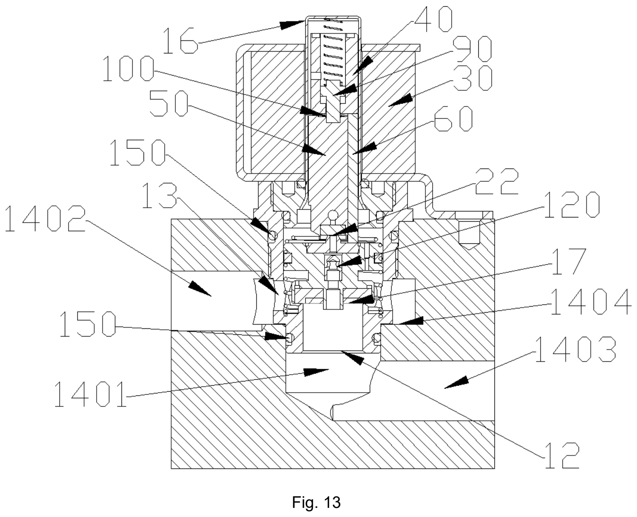

As shown in Figs. 1-17, some embodiments of the present disclosure provide a solenoid valve, including: a housing assembly 10, an installation cavity 11 is provided inside the housing assembly 10; wherein the housing assembly 10 has a first flow port 12, a second flow port 13, and a main valve port 17 located between the first flow port 12 and the second flow port 13; and an on-off assembly 20, movably provided in the installation cavity 11; wherein the on-off assembly 20 is used for controlling opening or closing of the main valve port 17, so as to realize connection and disconnection between the first flow port 12 and the second flow port 13.

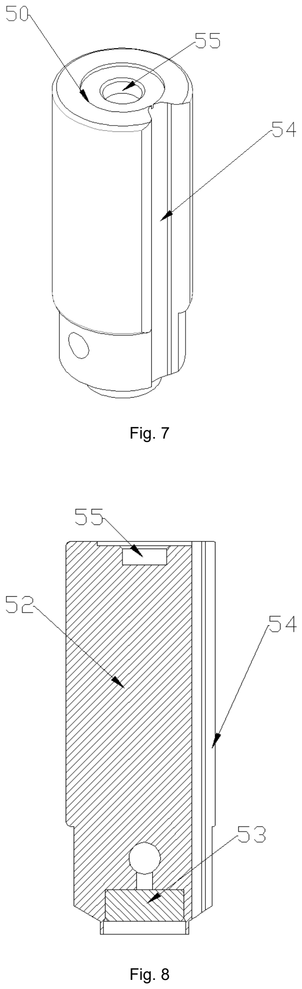

Specifically, as shown in Fig. 1, Fig. 2, Fig. 3 and Fig. 4, in a first embodiment of the present disclosure, the solenoid valve further includes: a coil assembly 30, provided on the housing assembly 10; an upper iron core 40, movably provided in the installation cavity 11; a lower iron core 50, movably and elastically provided in the installation cavity 11 and located below the upper iron core 40; and a lower push rod 60, movably provided in the installation cavity 11; wherein an end of the lower push rod 60 is in abutting fit with the upper iron core 40, and an other end of the lower push rod 60 is in abutting fit with the on-off assembly 20. As shown in Fig. 7, the lower iron core 50 is provided with a constraint channel 54, and an inner wall of the constraint channel 54 is matched with the lower push rod 60, so as to constrain the lower push rod 60 to a reciprocating linear motion in a vertical direction.

The solenoid valve further includes an elastic member 80 and an upper push rod 90, and the lower iron core 50 is elastically provided in the installation cavity 11 by the elastic member 80 and the upper push rod 90; a guide cavity 41 extending axially is provided inside the upper iron core 40, both at least a part of the elastic member 80 and at least a part of the upper push rod 90 are located in the guide cavity 41, and the upper push rod 90 is in limiting fit with an inner wall of the guide cavity 41; and an end of the elastic member 80 abuts against the housing assembly 10, an other end of the elastic member 80 abuts against an end of the upper push rod 90, and an other end of the upper push rod 90 abuts against the lower iron core 50.

In some embodiments, a maximum spacing between the upper iron core 40 and the lower iron core 50 is set to be equal to an opening degree of a pilot valve port 22 (that is, the maximum spacing between the upper iron core 40 and the lower iron core 50 is equal to the opening degree of the pilot valve port), the spacing between the upper iron core 40 and the lower iron core 50 is effectively reduced, thereby reducing a moving speed of the lower iron core 50 when the lower iron core 50 is attracted to the upper iron core 40, reducing a collision noise between the lower iron core 50 and the upper iron core 40 caused by attraction, and reducing damage caused by collision to the lower iron core 50 and the upper iron core 40. The solenoid valve in the present disclosure may be a normally-closed valve, and usual operating state thereof is closed (for example: when a coil assembly is energized, a movable iron core moves by a certain distance to open the pilot valve port, and then the movable iron core continues to move by a certain distance, i.e. a movement distance of a piston opening the main valve port). Obviously, the technical solution of the present disclosure is also applicable to normally-open valves, and has good applicability.

It should be noted that: both the upper iron core 40 and the lower iron core 50 in some embodiments have short action strokes, and therefore high-frequency on and off can be achieved, and a service life of the solenoid valve can be effectively prolonged.

As shown in Fig. 1, Fig. 2, Fig. 3 and Fig. 4, the on-off assembly 20 is located below the lower iron core 50; the on-off assembly 20 has a through intermediate channel 21; an end of the intermediate channel 21 is in communication with the first flow port 12, and an other end of the intermediate channel 21 is a pilot valve port 22; the lower iron core 50 is used for controlling the opening and closing of the pilot valve port 22, so as to control a pressure difference between an upper part and a lower part of the on-off assembly 20; and a voltage stabilizing channel 25 is further provided inside the on-off assembly 20, two ends of the voltage stabilizing channel 25 are respectively in communication with the upper part and the lower part of the on-off assembly 20, and the lower part of the on-off assembly 20 is in communication with the second flow port 13. In a state where the coil assembly 30 is energized, the upper iron core 40 and the lower iron core 50 attract each other, the lower iron core 50 moves upwards, the pilot valve port 22 opens, then the on-off assembly 20 moves upwards under the action of a fluid pressure difference, and the upper iron core 40 and the lower iron core 50 move upwards along with the on-off assembly 20, thereby opening the main valve port 17; and in a state where the coil assembly 30 is de-energized, the lower iron core 50 moves downwards to close the pilot valve port 22, then the on-off assembly 20 moves downwards under the action of the pressure difference, and the upper iron core 40 and the lower iron core 50 move downwards along with the on-off assembly 20, thereby closing the main valve port 17.

With this arrangement, the whole solenoid valve can be opened and closed smoothly, and the operation thereof is reliable. When a high-pressure medium fluid flows from the second flow port 13 to the first flow port 12, in a state where the coil assembly 30 is energized, the upper iron core 40 attracts the lower iron core 50 to make the lower iron core 50 move towards the upper iron core 40, the pilot valve port 22 opens, and the high-pressure medium fluid above the on-off assembly 20 flows through the pilot valve port 22 and the intermediate channel 21 in sequence to the first flow port 12, a low-pressure region is formed above the on-off assembly 20; and under the action of a high pressure below the on-off assembly 20, the on-off assembly 20 moves upwards, thereby opening the first flow port 12, and the second flow port 13 and the first flow port 12 maintains a communicated state, which allows the high-pressure medium fluid to flow therethrough; and the on-off assembly 20 pushes, by the lower push rod 60, the upper iron core 40 to move upwards, so as to drive the upper iron core 40 and the lower iron core 50 to move upwards as a whole. In a state where the coil assembly 30 is de-energized, the lower iron core 50 is reset under the action of an elastic force to close the pilot valve port 22, the on-off assembly 20 moves downwards under the action of the pressure difference to close the first flow port 12, the upper iron core 40 moves downwards along with the on-off assembly 20 to reset, the solenoid valve is in a closed state, and the high-pressure medium fluid does not flow therethrough.

A farthest distance between the lower iron core 50 and the pilot valve port 22 is the opening degree of the pilot valve port 22, and the maximum spacing between the upper iron core 40 and the lower iron core 50 is equal to the opening degree of the pilot valve port 22.

A resistance-reducing groove is provided at an end of the upper iron core 40 close to the lower iron core 50, and the resistance-reducing groove is used for reducing a separation resistance between the upper iron core 40 and the lower iron core 50, thereby effectively reducing the separation resistance between the upper iron core 40 and the lower iron core 50, and ensuring quick separation of the upper iron core 40 from the lower iron core 50.

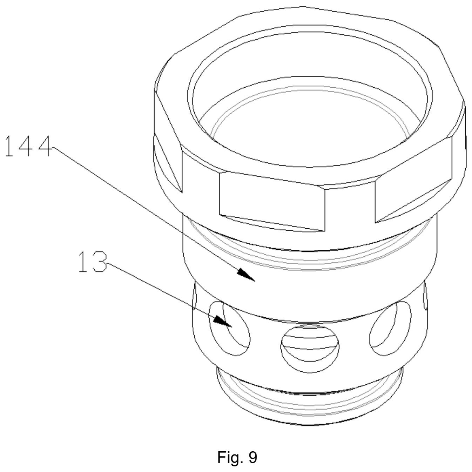

**In** a second embodiment of the present disclosure, on the basis of the first embodiment of the present disclosure, as shown in Fig. 9, Fig. 10 and Fig. 11, the housing assembly 10 includes a valve seat 14 and a valve cover 15, wherein the first flow port 12, the second flow port 13 and the main valve port 17 are all provided on the valve seat 14; wherein the valve cover 15 is detachably connected to the valve seat 14 by threads; the valve seat 14 has a force-receiving surface 141, and the force-receiving surface 141 abuts against the valve cover 15; a pressure generated by a threaded connection force between the valve cover 15 and the valve seat 14 on the force-receiving surface 141 lies within a set pressure range (for example, located within a pressure range that can be born by the force-receiving surface 141). The force-receiving surface 141 is an annular flat surface, a bearing surface on the valve cover 15 which fits the force-receiving surface 141 is a flat surface, and the bearing surface abuts against the annular flat surface; an annular constraint groove 151 is provided in a circumferential direction of a side wall of the valve cover 15; or an annular constraint groove 151 is provided in a circumferential direction of a side wall of the valve seat 14. The solenoid valve further includes an annular sealing ring 130, wherein the annular sealing ring 130 is provided in the annular constraint groove 151 and is in limiting fit with the annular sealing ring 130, and the annular sealing ring 130 is matched with an inner wall of the valve seat 14 so as to seal the installation cavity 11.

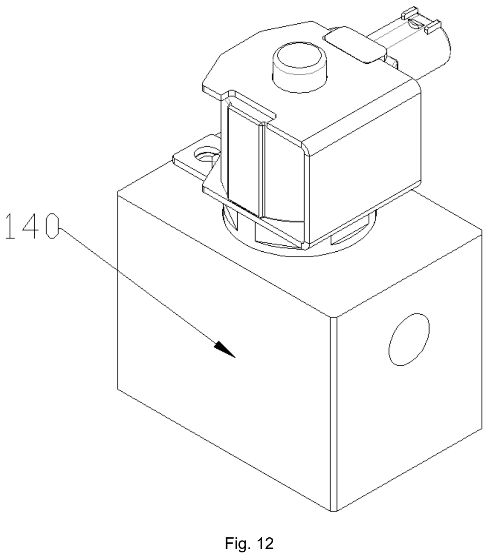

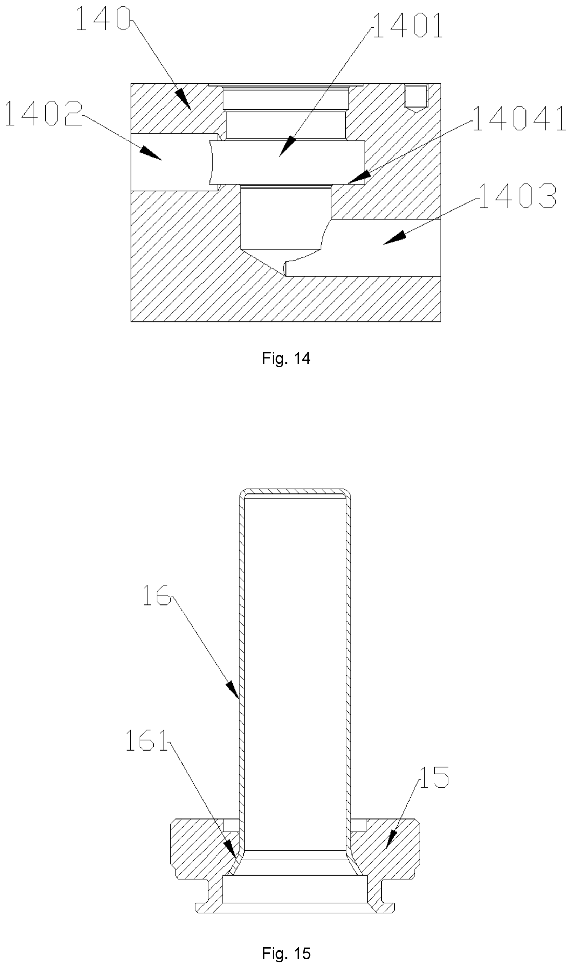

As shown in Fig. 12, Fig. 13 and Fig. 14, the solenoid valve further includes an installation seat 140, wherein the installation seat 140 is detachably connected to the valve seat 14 by threads; the solenoid valve further includes O-shaped rings 150, wherein the O-shaped rings 150 are arranged between the valve seat 14 and the installation seat 140 so as to achieve sealing; there are two O-shaped rings 150, which are arranged at an interval along an axial direction of the valve seat 14. A valve seat cavity 142 is provided inside the valve seat 14, and the first flow port 12, the second flow port 13 and the main valve port 17 are respectively in communication with the valve seat cavity 142; circumferential grooves 143 are provided on a circumferential direction of an outer wall of the valve seat 14, and the circumferential grooves 143 are used for accommodating and limiting the O-shaped rings 150; and there are two circumferential grooves 143, and the two circumferential grooves 143 are arranged at an interval along the axial direction of the valve seat 14 so as to accommodate the two O-shaped rings 150 respectively. There are a plurality of second flow ports 13 which are arranged at intervals along a circumferential direction of the valve seat 14; and a threaded mating section 144 is provided in a middle of the valve seat 14, the threaded mating section 144 is located between the two circumferential grooves 143, and an outer circumferential surface of the threaded mating section 144 is in a threaded connection with an inner wall of the installation seat 140. As shown in Fig. 14, a cavity 1401, and a first flow channel 1402 and a second flow channel 1403 which are respectively in communication with the cavity 1401 are provided inside the installation seat 140; the threaded mating section 144 of the valve seat 14 is in threaded connection with an inner wall of the cavity 1401; a limiting surface 1404 is provided inside the cavity 1401, and the limiting surface 1404 abuts against the valve seat 14 to axially limit the valve seat 14; and the first flow channel 1402 is in communication with the second flow port 13, and the second flow channel 1403 is in communication with the first flow port 12.

**In** existing solenoid valves, a valve cover is usually connected to a valve seat by welding, which results in a complex connection between the valve cover and the valve seat and is inconvenient. In some embodiments, the valve cover 15 is detachably connected to the valve seat 14 by threads, thereby not only ensuring the reliability of a connection between the valve cover 15 and the valve seat 14, but also facilitating replacement, detachment and maintenance of the valve cover 15 and the valve seat 14. Since a certain pre-tightening force is required during threaded connection, in order to ensure that a pressure of the pre-tightening force on the valve seat 14 satisfies an actual requirement for a deformation of the valve seat, the force-receiving surface 141 is provided; and by setting the size of the force-receiving surface 141 to be not less than 1.5 mm (for example, a width of an annular surface), the pressure of the pre-tightening force between the valve cover 15 and the valve seat 14 on the force-receiving surface 141 is within an allowed set range.

**In** some embodiments, as shown in Fig. 1, Fig. 2, Fig. 3, Fig. 4 and Fig. 13, in a case where the first flow port 12 is an outlet and the second flow port 13 is an inlet, a flow area of the first flow port 12 is not greater than a flow area of the second flow port 13, so as to avoid throttling.

When the first flow port 12 is the outlet and the second flow port 13 is the inlet, by setting the flow area of the first flow port 12 to be not greater than the flow area of the second flow port 13, an occurrence of throttling can be effectively avoided, and an operational reliability of the solenoid valve is improved.

**In** some embodiments, as shown in Fig. 1, Fig. 2, Fig. 3, Fig. 4 and Fig. 13, the valve seat 14 is further provided with a positioning groove, the positioning groove surrounds a circumferential direction of the main valve port 17; and the solenoid valve further includes a buffer spring, an end of the buffer spring is arranged in the positioning groove and is in limiting fit with the positioning groove, and an other end of the buffer spring abuts against the on-off assembly 20 so as to buffer an impact of the on-off assembly 20 on the valve seat 14.

By configuring the limiting fit between the buffer spring and the positioning groove, the impact of the on-off assembly 20 on the valve seat 14 during movement is effectively buffered, thereby not only reducing collision noise, but also reducing collision wear; and by arranging the constraint channel 54 on the lower iron core 50 to cooperate with the lower push rod 60, the lower push rod 60 can smoothly perform a reciprocating linear motion in a vertical direction, thereby ensuring an operational reliability of the lower push rod 60.

**In** a third embodiment of the present disclosure, on the basis of the first embodiment of the present disclosure, as shown in Fig. 1, Fig. 2, Fig. 3, Fig. 4, Fig. 11, Fig. 13 and Fig. 15, the housing assembly 10 further includes a sleeve 16 and a valve cover 15, wherein an end of the sleeve 16 is fixed on the valve cover 15 by laser welding.

An end of the sleeve 16 close to the valve cover 15 is of a flared structure, an opening size of an end of the flared structure towards the main valve port 17 is greater than an opening size of an end of the flared structure away from the main valve port 17, and the flared structure is matched with an inner wall of the valve cover 15. The laser welding is a form of penetration welding, and the sleeve 16 is fixed on the valve cover 15 by the penetration welding on the flared structure. The flared structure includes a frustoconical curved section 163, a periphery of the frustoconical curved section 163 is provided with a frustoconical curved surface 161, an inner wall of a frustoconical mating section of the valve cover 15 is provided with a frustoconical fit surface 152, the frustoconical curved surface 161 is in abutting fit with the frustoconical fit surface 152, and a central axis of the frustoconical curved surface 161 is collinear with a central axis of the frustoconical fit surface 152.

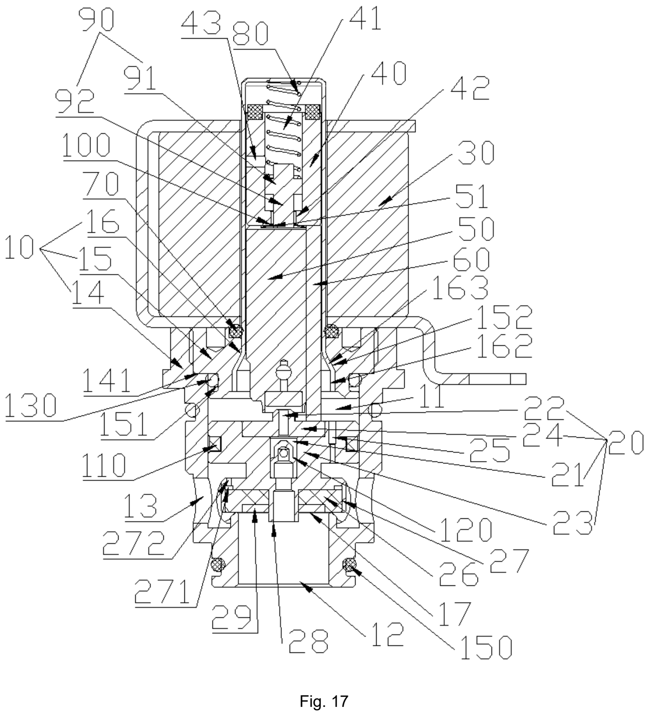

As shown in Fig. 17, in a tenth embodiment of the present disclosure, on the basis of the first embodiment of the present disclosure, a part of the sleeve 16 connected to the valve cover 15 is of a flared structure, the flared structure includes a frustoconical curved section 163 and a straight section 162 connected to each other, an opening size of an end of the frustoconical curved section 163 towards the main valve port 17 is greater than an opening size of an end of the frustoconical curved section away from the main valve port 17, and the straight section 162 is connected to the end of the frustoconical curved section 163 having a larger opening size; an inner wall of the valve cover 15 is provided with a frustoconical mating section, and a frustoconical curved surface 161 on the frustoconical curved section 163 is in abutting fit with a frustoconical fit surface 152 of the frustoconical mating section; and the straight section 162 and the valve cover 15 are welded in a laser penetration welding manner. By providing the straight section 162, it is further convenient for the sleeve 16 and the valve cover 15 to be welded and fixed in the laser penetration welding manner, and it can be ensured that welding quality and welding strength satisfy practical requirements.

The solenoid valve further includes a first sealing ring 70, and the first sealing ring 70 is sleeved at a joint of the sleeve 16 and the valve cover 15; the first sealing ring 70 is located at the end of the flared structure away from the main valve port 17, and the first sealing ring 70 is at least used for sealing a welding seam of the laser welding; and an interior of the sleeve 16 is used for accommodating at least a part of the upper iron core 40 and the lower iron core 50.

**It** should be noted that: an installation annular groove is provided at a side of the valve cover 15 close to the sleeve 16, the first sealing ring 70 is located in the installation annular groove; and in a space enclosed by the coil assembly 30 and the sleeve 16, the first sealing ring 70 is in sealing fit with one or both of the sleeve 16 and the coil assembly 30, and the first sealing ring 70 is in sealing fit with the valve cover 15.

For solenoid valves in the related art, a sleeve and a valve cover thereof are generally connected by furnace welding, but the time of a final cooling process in the furnace welding is relatively long, and a process of the furnace welding is equivalent to performing an annealing treatment on the sleeve once, which will reduce an overall hardness of the sleeve. However, in some embodiments, the sleeve 16 and the valve cover 15 are fixed by the laser welding, and the laser welding uses local heating, without affecting the overall hardness of the sleeve 16.

As shown in Fig. 15, by configuring the end of the sleeve 16 close to the valve cover 15 to be the flared structure, the frustoconical curved surface 161 effectively increases a pull-off force of the sleeve 16 relative to the valve cover 15, and effectively reduces a risk of pull-off of the sleeve 16.

**It** should be noted that: an overall structure of the sleeve 16 is an integrated structure, and no additional sleeve cap needs to be provided for sealing, thereby ensuring a simple structure of the sleeve 16.

By configuring the first sealing ring 70 to be sleeved at the joint of the sleeve 16 and the valve cover 15, it can effectively prevent foreign matter such as condensed water outside the sleeve (when the fluid inside the solenoid valve is a low-temperature fluid) from flowing to the laser welding seam, thereby preventing the condensed water from electrochemically corroding the welding seam, and ensuring reliable sealing between the sleeve 16 and the valve cover.

**In** a fourth embodiment of the present disclosure, on the basis of the first embodiment of the present disclosure, as shown in Fig. 1, Fig. 2, Fig. 3, Fig. 4 and Fig. 13, the solenoid valve further includes an elastic gasket 100, an end of the lower iron core 50 close to the upper push rod 90 is provided with a constraint groove 51, at least a part of the elastic gasket 100 is arranged in the constraint groove 51 and is in limiting fit with the constraint groove 51; the elastic gasket 100 is sleeved on a circumferential outer wall of the upper push rod 90; the elastic gasket 100 is a disc spring; a minimum axial size of the elastic gasket 100 is not greater than an axial size of the constraint groove 51, such that the upper iron core 40 and the lower iron core 50 can be attached together; and the disc spring is made of a metal material.

**In** an operation process of an existing solenoid valve, both collision between an upper iron core and a lower iron core and collision between the upper iron core and a sleeve may generate noise, thereby causing a relatively large noise when the solenoid valve operates. In order to reduce the noise during operation of the solenoid valve, in some embodiments, the elastic gasket 100 is configured to match with the constraint groove 51, and the maximum axial height of the elastic gasket 100 is greater than the axial height of the constraint groove 51, so as to effectively buffer the impact caused by the collision between the upper iron core 40 and the lower iron core 50.

By configuring the elastic gasket 100 to be sleeved on the circumferential outer wall of the upper push rod 90, the elastic gasket 100 is effectively limited and constrained, thereby ensuring reliable operation of the elastic gasket 100.

It should be noted that: the elastic gasket 100 in an initial state is partially located outside the constraint groove 51, and the elastic gasket 100 in a compressed state is completely located inside the constraint groove 51. The size of the elastic gasket 100 is relatively small, so as to ensure that the elastic gasket 100 is compressed and deformed only when the upper iron core 40 and the lower iron core 50 are to be attracted together, and the lower iron core 50 is not affected by an elastic force of the elastic gasket 100 in most of its stroke towards the upper iron core 40, thereby reducing an effect of a compression deformation of the elastic gasket 100 on an attraction force between the upper iron core 40 and the lower iron core 50 to a maximum extent.

By setting the elastic gasket 100 to be the disc spring, a structure of the elastic gasket 100 is simplified, and processing difficulty and cost are effectively reduced; meanwhile, compared with the existing common cylinder spring, the disc spring has a large value of stiffness K, and has a strong buffering force after being compressed and deformed, thereby having a better capability of reducing noise.

It should be noted that: by setting the size of the disc spring, the disc spring is not compressed at the moment when the solenoid valve is energized; therefore, closing of the solenoid valve will not be adversely affected, and at the moment when the upper iron core 40 and the lower iron core 50 are attracted and collide with each other, the disc spring is compressed to achieve an effect of buffering the collision, such that the noise caused by collision of the upper iron core 40 and the lower iron core 50 can be effectively reduced, thereby reducing the noise during operation of the solenoid valve; moreover, compared with other solutions of non-metal materials, the disc spring made of the technical material has a minimum effect on an attenuation of an electromagnetic force of the coil assembly 30, and has less effect on an MOPD (Maximum Operating Pressure Difference) of the solenoid valve.

By configuring the minimum axial size (height) of the elastic gasket 100 to be not greater than the axial size (height) of the constraint groove 51, it is effectively ensured that the upper iron core 40 and the lower iron core 50 can be closely attached without affecting the attraction force between the upper iron core 40 and the lower iron core 50.

By setting the elastic gasket 100 as a metal material, compared with a common rubber material, the metal material is not a magnetic isolation material, and the magnetic attraction force between the upper iron core 40 and the lower iron core 50 is not weakened, thereby ensuring the operational reliability and a wide pressure application range of the solenoid valve.

**In** some embodiments, as shown in Fig. 1, Fig. 2, Fig. 3, Fig. 4 and Fig. 13, the solenoid valve further includes a rubber gasket, and the rubber gasket is provided between the upper iron core 40 and an inner wall of the installation cavity 11, so as to buffer an impact of the upper iron core 40 on the inner wall of the installation cavity 11. The housing assembly 10 includes a sleeve 16 and a valve cover 15, wherein an end of the sleeve 16 is fixed on the valve cover 15 by welding. The interior of the sleeve 16 is used for accommodating at least a part of the upper iron core 40 and the lower iron core 50. A gasket groove is provided on a top of the upper iron core 40 or on an inner wall of an end of the sleeve 16 close to the upper iron core 40, and the rubber gasket is provided in the gasket groove and is in limiting fit with the gasket groove.

By providing the rubber gasket between the upper iron core 40 and the inner wall of the installation cavity 11 (the rubber gasket may be fixed in an upper part of the interior of the sleeve 16 or sleeved and fixed on the upper iron core 40), not only the impact of the upper iron core 40 on the inner wall of the installation cavity 11 is effectively buffered, but also the noise is effectively reduced.

**In** some specific embodiments of the present disclosure, the rubber gasket is fixedly installed on the upper iron core 40 to facilitate installation.

**In** a fifth embodiment of the present disclosure, on the basis of the first embodiment of the present disclosure, as shown in Fig. 1, Fig. 2, Fig. 3, Fig. 4 and Fig. 13, a resistance-reducing groove is provided at an end of the upper iron core 40 close to the lower iron core 50, and the resistance-reducing groove is used for reducing a separation resistance between the upper iron core 40 and the lower iron core 50; and a roughness of a surface of the end of the upper iron core 40 close to the lower iron core 50 is within a set range, so as to reduce the separation resistance between the upper iron core 40 and the lower iron core 50.

The installation cavity 11 generally contains an oily substance (for example: the fluid is an oily substance), such that when the upper iron core 40 is attracted to the lower iron core 50, they are difficult to separate. Therefore, to solve the described problem, the following two methods may be adopted:
one method is to provide the resistance-reducing groove at the end of the upper iron core 40 close to the lower iron core 50, which can reduce the separation resistance between the upper iron core 40 and the lower iron core 50 when the first iron core 40 and the lower iron core 50 are attracted, thereby ensuring quick separation of the upper iron core 40 from the lower iron core 50; and
an other method is to set the roughness of the surface of the end of the upper iron core 40 close to the lower iron core 50 to be within the set range (usually larger, for example, controlling Ra to be greater than 3.2 or 6.3), which can reduce the separation resistance between the upper iron core 40 and the lower iron core 50 when the first iron core 40 and the lower iron core 50 are attracted, thereby ensuring quick separation of the upper iron core 40 from the lower iron core 50.

In some embodiments, the roughness Ra of the surface of the end of the upper iron core 40 close to the lower iron core 50 is greater than 3.2, so as to reduce the separation resistance between the upper iron core 40 and the lower iron core 50.

In a sixth embodiment of the present disclosure, on the basis of the first embodiment of the present disclosure, as shown in Fig. 1, Fig. 2, Fig. 3, Fig. 4 and Fig. 13, the upper iron core 40 is internally provided with a guide cavity 41 extending axially, a fit hole 42 in communication with the guide cavity 41 and a flow channel 43 in communication with the guide cavity 41; and the upper push rod 90 includes a guide section 91 and a mating section 92 which are connected in sequence, wherein the guide section 91 is arranged in the guide cavity 41 and is in guide fit with an inner wall of the guide cavity 41. The elastic member 80 is located in the guide cavity 41, an end of the elastic member 80 abuts against the housing assembly 10, and an other end of the elastic member 80 abuts against the guide section 91; and at least a part of the mating section 92 is located within the guide cavity 41 and the mating section 92 extends from the fit hole 42 to abut against the lower iron core 50. A gap between the guide section 91 and the inner wall of the guide cavity 41 is smaller than a gap between the mating section 92 and an inner wall of the fit hole 42.

The housing assembly 10 includes a sleeve 16 and a valve cover 15, wherein an end of the sleeve 16 is fixed on the valve cover 15 by welding. An interior of the sleeve 16 is used for accommodating at least a part of the upper iron core 40 and the lower iron core 50. Fluid in the guide cavity 41 of the upper iron core 40 enters a gap between the upper iron core 40 and the sleeve 16 through the flow channel 43. The upper rod 90 is made of a copper material.

The flow channel 43 and the mating section 92 are located on two sides of the guide section 91, respectively. Fluid in the guide cavity 41 at an end of the guide section 91 can enter the gap between the upper iron core 40 and the sleeve 16 through the flow channel 43, and fluid in the guide cavity 41 at an other end of the guide section 91 can flow out of the guide cavity 41 through the gap between the mating section 92 and the inner wall of the fit hole 42.

It should be noted that: at least a part of both the elastic member 80 and the upper push rod 90 is located in the guide cavity 41; and an end of the elastic member 80 abuts against the housing assembly 10, an other end of the elastic member 80 abuts against an end of the upper push rod 90, and an other end of the upper push rod 90 abuts against the lower iron core 50.

Regarding the existing solenoid valve, after being de-energized, it has been found that a lower iron core cannot fall back quickly under the action of fluid in an installation cavity. Therefore, in order to solve the described technical problem, the elastic member 80 and the upper push rod 90 are configured to cooperate with the lower iron core 50, such that an elastic force of the elastic member 80 can be transmitted to the lower iron core 50 through the upper push rod 90, allowing the lower iron core 50 to always bear a valve-closing force, thereby ensuring quick falling back of the lower iron core 50.

By providing the guide cavity 41, the fit hole 42 and the flow channel 43, and configuring the gap between the guide section 91 and the inner wall of the guide cavity 41 to be less than the gap between the mating section 92 and the inner wall of the guide cavity 41, the fluid can flow freely, a stability of pressure variation in the installation cavity 11 is further ensured, and the reciprocating motion of the lower iron core 50 is more rapid and reliable; and by using a copper material (for example: a brass material) for the upper push rod 90, it is ensured that the corrosion resistance, and the overall rigidity and strength of the upper push rod 90 satisfy actual use requirements.

In a seventh embodiment of the present disclosure, on the basis of the first embodiment of the present disclosure, as shown in Fig. 1, Fig. 2, Fig. 3, Fig. 4 and Fig. 13, the solenoid valve further includes a piston ring 110, the piston ring 110 is sleeved on the on-off assembly 20 and is in sealing fit with an inner wall of the installation cavity 11; wherein the piston ring 110 forms a non-closed annular structure by a cut-off process.

By providing the piston ring 110, a sealing performance between the on-off assembly 20 and the installation cavity 11 is ensured; and by configuring the piston ring 110 to be cut off to form a non-closed annular structure, a deformation amount of the piston ring 110 is increased, the applicability of the piston ring 110 is improved, and a problem of inconvenient installation of the piston ring 110 due to a relatively large overall size is avoided.

**In** an eighth embodiment of the present disclosure, on the basis of the first embodiment of the present disclosure, as shown in Fig. 1, Fig. 2, Fig. 3, Fig. 4 and Fig. 13, the solenoid valve further includes a check valve 120. The check valve 120 is movably arranged in the intermediate channel 21 to block or open the pilot valve port 22, such that the intermediate channel 21 can allow for unidirectional flow; and the on-off assembly 20 includes a piston body 23 and a pilot valve block 24 fixedly provided on the piston body 23, the pilot valve port 22 is provided on the pilot valve block 24, and at least a part of the intermediate channel 21 is provided in the piston body 23. The intermediate channel 21 includes a piston channel 231 provided in the piston body 23 and a guide channel 243 provided in the pilot valve block 24. The check valve 120 is located in the piston channel 231, the check valve 120 blocks a lower opening of the guide channel 243, and an upper opening of the guide channel 243 is the pilot valve port 22.

An inner wall of the piston channel 231 is provided with a step surface, the check valve 120 can be in abutting fit with the step surface, and the step surface is used for limiting an axial movement of the check valve 120; and wall thickness of the check valve 120 at each position is consistent. The check valve 120 is internally provided with a first flow section 121 and a second flow section 122 in communication with each other in sequence from bottom to top, a radial size of the first flow section 121 is greater than a radial size of the second flow section 122, a side surface of the second flow section 122 is provided with a through hole 123, and the through hole 123 achieves communication between the second flow section 122 and the piston channel 231. A wall thickness of the first flow section 121 is equal to a wall thickness of the second flow section 122.

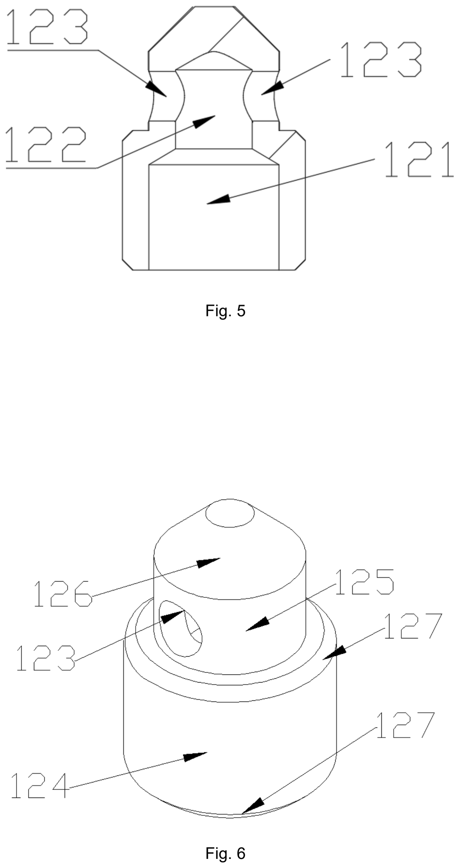

As shown in Fig. 6, the check valve 120 includes, from bottom to top, a first cylindrical portion 124, a second cylindrical portion 125 and a frustoconical portion 126 which are sequentially connected, in which the first flow section 121 is located inside the first cylindrical portion 124, the second flow section 122 is located inside the second cylindrical portion 125, and the through hole 123 passes through the second cylindrical portion 125; the first cylindrical portion 124 may be in abutting fit with the step surface; the frustoconical portion 126 abuts against or separates from the lower opening of the guide channel 243 so as to open or close the pilot valve port 22; and two ends of the outside of the first cylindrical portion 124 are provided with chamfer structures 127.

The pilot valve block 24 is fixed on the piston body 23 by welding; the pilot valve block 24 is welded and fixed on a top end face of the piston body 23; or, a pilot valve groove 232 is provided on a top end face of the piston body 23, and the pilot valve block 24 is welded and fixed in the pilot valve groove 232 and is in limiting fit with an inner wall of the pilot valve groove 232.

Or, at least a part of the pilot valve block 24 is located in the piston channel 231, and an outer wall of the pilot valve block 24 and an inner wall of the piston channel 231 are fixed by welding. The pilot valve block 24 includes an insertion section 241 cooperating with the piston body 23 and a pilot valve section 244 internally provided with the pilot valve port 22, and a diameter of the insertion section 241 is larger than a diameter of the pilot valve section 244.

When the high-pressure medium fluid flows from the first flow port 12 to the second flow port 13, in a state where the coil assembly 30 is de-energized, the on-off assembly 20 blocks the main valve port 17, and the solenoid valve is in a closed state; and in a state where the coil assembly 30 is energized, the upper iron core 40 attracts the lower iron core 50 to make the lower iron core 50 move towards the upper iron core 40, the pilot valve port 22 opens, the high-pressure medium fluid pushes the check valve 120 upwards to move, and the check valve 120 blocks the lower opening of the guide channel 243, to block the pilot valve port 22, such that the high-pressure medium fluid cannot enter an upper part of the on-off assembly 20 from the first flow port 12 through the pilot valve port 22, a high-pressure state above the on-off assembly 20 is eliminated, and the on-off assembly 20 moves upwards under the action of the high-pressure medium fluid, such that the main valve port 17 opens, thereby maintaining a communication state between the first flow port 12 and the second flow port 13, and allowing the high-pressure medium fluid to flow therethrough. When the high-pressure medium fluid flows from the second flow port 13 to the first flow port 12, in a state where the coil assembly 30 is de-energized, the solenoid valve is in a closed state, and the high-pressure medium fluid does not flow therethrough; and in a state where the coil assembly 30 is energized, the upper iron core 40 attracts the lower iron core 50 to make the lower iron core 50 move towards the upper iron core 40, the pilot valve port 22 opens, the check valve 120 is spaced apart from the lower opening of the guide channel 243 under the action of a pressure difference, and the high-pressure medium fluid above the on-off assembly 20 flows through the interior of the pilot valve port 22, the intermediate channel 21 and an interior of the check valve 120 to the first flow port 12, a low-pressure region is formed above the on-off assembly 20; and under the action of a high pressure below the on-off assembly 20, the on-off assembly 20 moves upwards, thereby opening the main valve port 17, and the second flow port 13 and the first flow port 12 maintains a communicated state, which allows the high-pressure medium fluid to flow therethrough.

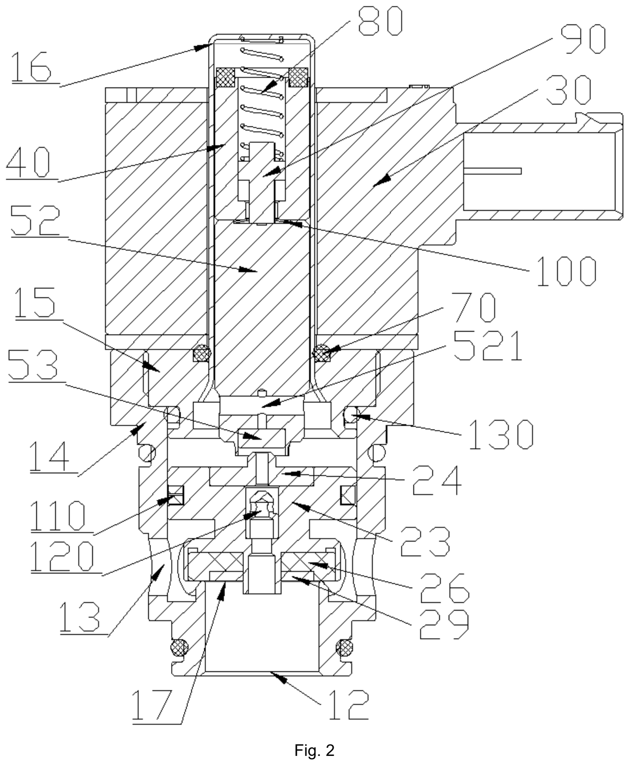

As shown in Fig. 1 and Fig. 2, by providing the check valve 120, the solenoid valve in some embodiments can achieve bidirectional flow (i.e. both the first flow port 12 and the second flow port 13 can be fluid inlets). By providing the pilot valve block 24 and the piston body 23 as separate structures, the pilot valve port 22 and the intermediate channel 21 on the pilot valve block 24 can be separately machined and formed, which helps to improve the machining precision of the pilot valve port 22, the intermediate channel 21, the pilot valve block 24 and the piston body 23; and the pilot valve block 24 is configured to be fixed on the piston body 23 by welding, which on the one hand allows the pilot valve block 24 to be reliably fixed, and on the other hand facilitates installation of the pilot valve block 24 on the piston body 23.

As shown in Fig. 5, in the eighth embodiment of the present disclosure, the wall thickness of the first flow section 121 is equal to the wall thickness of the second flow section 122.

**In** a ninth embodiment of the present disclosure, on the basis of the first embodiment of the present disclosure, as shown in Fig. 1, Fig. 2, Fig. 3, Fig. 4 and Fig. 13, the solenoid valve further includes a check valve 120, wherein the check valve 120 is movably arranged in the intermediate channel 21 to block or open the pilot valve port 22, such that the intermediate channel 21 can allow for unidirectional flow. The on-off assembly 20 includes a piston body 23 and a pilot valve block 24 provided on the piston body 23; and the intermediate channel 21 includes a piston channel 231 provided in the piston body 23 and a guide channel 243 provided in the pilot valve block 24. An upper opening of the guide channel 243 is the valve guide port 22; and the check valve 120 is located in the guide channel 243 or the piston channel 231, and the check valve 120 blocks an opening of the guide channel 243 below the pilot valve port 22. An inner wall of the piston channel 231 is provided with a step surface, the check valve 120 can be in abutting fit with the step surface, and the step surface is used for limiting an axial movement of the check valve 120; and wall thickness of the check valve 120 at each position is consistent. The check valve 120 is internally provided with a first flow section 121 and a second flow section 122 in communication with each other in sequence from bottom to top, a radial size of the first flow section 121 is greater than a radial size of the second flow section 122, a side surface of the second flow section 122 is provided with a through hole 123, and the through hole 123 achieves communication between the second flow section 122 and the piston channel 231; and a wall thickness of the first flow section 121 is equal to a wall thickness of the second flow section 122.

As shown in Fig. 6, the check valve 120 includes, from bottom to top, a first cylindrical portion 124, a second cylindrical portion 125 and a frustoconical portion 126 which are sequentially connected, in which the first flow section 121 is located inside the first cylindrical portion 124, the second flow section 122 is located inside the second cylindrical portion 125, and the through hole 123 passes through the second cylindrical portion 125. The first cylindrical portion 124 may be in abutting fit with the step surface. The frustoconical portion 126 abuts against or separates from an lower opening of the guide channel 243 so as to open or close the pilot valve port 22. Two ends of an outside of the first cylindrical portion 124 are provided with chamfer structures 127.

The pilot valve block 24 is fixed on the piston body 23 by threaded connection. At least a part of the pilot valve block 24 is located in the piston channel 231, and at least a part of the check valve 120 is located in the piston channel 231. The piston channel 231 includes a threaded section and an accommodating section which are sequentially connected; the threaded section is in threaded connection with a part of the pilot valve block 24 located in the piston channel 231; and at least a part of the check valve 120 is provided in the accommodating section. Or, at least a part of the pilot valve block 24 is located in the piston channel 231, the check valve is located in the guide channel 243, and a part of the pilot valve block 24 located in the piston channel 231 is in threaded connection with an inner wall of the piston channel 231. The pilot valve block 24 further includes an insertion section 241, a limiting section 242 and a pilot valve section 244 which are sequentially connected, wherein the limiting section 242 is located outside the piston body 23; the insertion section 241 is located in the piston body 23 and is in threaded fit with the inner wall of the piston channel 231; and the guide channel 243 passes through the insertion section 241, the limiting section 242, and the pilot valve section 244, and the pilot valve port 22 is located on the pilot valve section 244. An outer wall of the limiting section 242 abuts against an outer wall of the piston body 23 in an axial direction so as to achieve axial limiting; a diameter of the insertion section 241 is greater than a diameter of the pilot valve section 244; and a sharp corner structure is provided on the outer wall of the limiting section 242, and the sharp corner structure is in abutting fit with the outer wall of the piston body 23. Or, the solenoid valve further includes a sealing gasket, wherein the sealing gasket is arranged between the outer wall of the limiting section 242 and the outer wall of the piston body 23, and is in abutting fit with the outer wall of the limiting section 242 and the outer wall of the piston body 23, respectively; and the sealing gasket is a sharp-angled sealing gasket, and the sharp-angled sealing gasket is at least used for preventing loosening of threaded fit between the insertion section 241 and the piston body 23.

A flow principle in this embodiment is the same as that in the eighth embodiment.

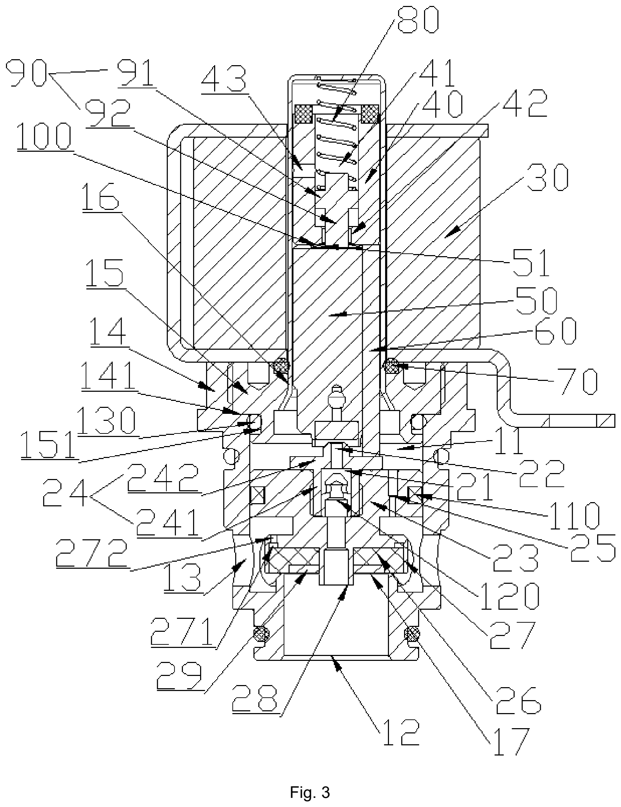

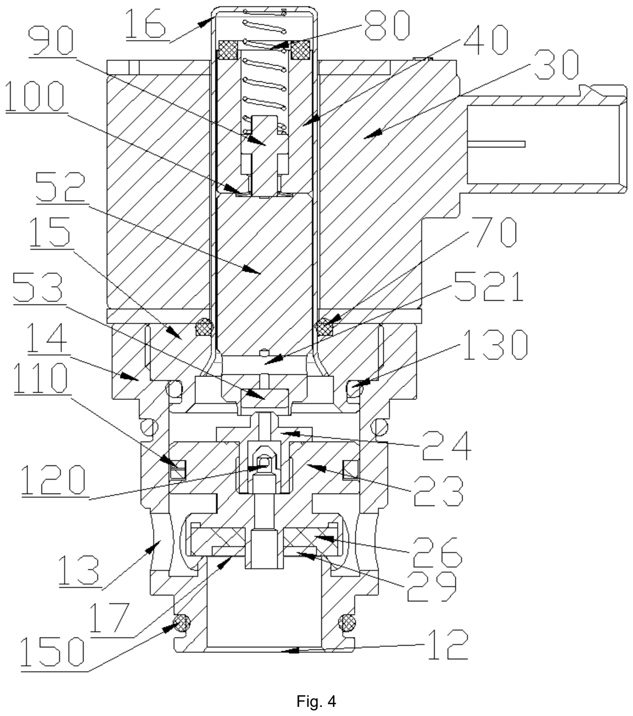

As shown in Fig. 3 and Fig. 4, by providing the check valve 120, the solenoid valve in some embodiments can achieve bidirectional flow (i.e. both the first flow port 12 and the second flow port 13 can be fluid inlets). By providing the pilot valve block 24 and the piston body 23 as separate structures, the pilot valve port 22 and the intermediate channel 21 on the pilot valve block 24 can be separately machined and formed, which helps to improve the machining precision of the pilot valve port 22, the intermediate channel 21, the pilot valve block 24 and the piston body 23; and the pilot valve block 24 is configured to be fixed on the piston body 23 by threaded connection, which on the one hand allows the pilot valve block 24 to be reliably fixed, and on the other hand also facilitates installation/detachment of the pilot valve block 24 on/from the piston body 23.

By configuring the pilot valve block 24 to include the insertion section 241 and the limiting section 242 connected sequentially, and arranging the check valve 120 in the insertion section 241, the check valve 120 can be effectively constrained, an operational reliability of the check valve 120 is ensured, and an installation between the check valve 120 and the pilot valve block 24 is also facilitated. By providing the sealing gasket, a sealing performance between the outer wall of the limiting section 242 and the outer wall of the piston body 23 is ensured. By configuring the sealing gasket as a sharp-angled sealing gasket, not only the sealing performance is further ensured, but also the loosening of threaded fit between the insertion section 241 and the piston body 23 can be effectively prevented.

As shown in Fig. 1, Fig. 2, Fig. 3, Fig. 4, Fig. 7, Fig. 8 and Fig. 13, the lower iron core 50 includes a lower core body 52 and a sealing member 53 arranged on the lower core body 52, wherein the sealing member 53 abuts against or moves away from the pilot valve port 22 so as to open or close the pilot valve port 22; an anti-flash evaporation channel 521 is provided in the lower core body 52, and the anti-flash evaporation channel 521 is in communication with the installation cavity 11; an end of the sealing member 53 close to the lower iron core body 52 is in communication with the anti-flash evaporation channel 521; and the sealing member 53 is made of a wear-resistant rubber material.

Such an arrangement ensures an operational reliability of the lower iron core 50 (for example: can effectively avoid an occurrence of flash evaporation), and the sealing member 53 is configured to use a wear-resistant rubber material, thereby ensuring that an overall service life and durability of the lower iron core 50 satisfy practical use requirements.

As shown in Fig. 1, Fig. 2, Fig. 3, Fig. 4, Fig. 13 and Fig. 16, the on-off assembly 20 includes a piston body 23 and a sealing block 26 provided on the piston body 23, wherein an installation groove 27 for installation of the sealing block 26 is provided on the piston body 23, and the sealing block 26 is in limiting fit with an inner wall of the installation groove 27; the sealing block 26 abuts against or moves away from the first flow port 12 so as to open or close the first flow port 12; and the installation groove 27 is an annular groove, a positioning protrusion 28 is further provided at a position of the piston body 23 located in a middle of the installation groove 27, and a positioning through hole is provided in a middle of the sealing block 26; in a state where the sealing block 26 is installed in the installation groove 27, the positioning protrusion 28 passes through the positioning through hole and cooperates with an inner wall of the positioning through hole so as to limit the sealing block 26. The on-off assembly 20 further includes an annular limiting piece 29, and the annular limiting piece 29 is provided at an end of the sealing block 26 away from the piston body 23; and the positioning protrusion 28 successively passes through the positioning through hole and a through hole in a middle of the annular limiting piece 29, and an end of the positioning protrusion 28 fits the annular limiting piece 29 by riveting, so as to fix the annular limiting piece 29 and the sealing block 26. The sealing block 26 is made of a wear-resistant rubber material. An annular micro-groove 271 is provided at a bottom of the installation groove 27, a pressure relief channel 272 is further provided on the piston body 23, and the pressure relief channel 272 achieves communication between the annular micro-groove 271 and the second flow port 13, such that fluid between the sealing block 26 and the installation groove 27 can be pressure-relieved into the installation cavity 11 through the pressure relief channel 272 and the annular micro-groove 271.

By providing the sealing block 26, an opening and closing effect of the channel assembly on the first flow port 12 is further ensured. By configuring the positioning protrusion 28 to pass through the positioning through hole and cooperate with the inner wall of the positioning through hole, the sealing block 26 is effectively limited, and reliable fixation of the sealing block 26 is ensured. By providing the annular limiting piece 29, the sealing block 26 is further constrained. The end of the positioning protrusion 28 fits the annular limiting piece 29 by riveting, thereby ensuring reliable limiting on the annular limiting piece 29. By configuring the sealing block 26 to use a wear-resistant rubber material, a service life and an operational reliability of the sealing block 26 are ensured. By providing the annular micro-groove 271, convenient installation of the sealing block 26 is ensured, and the annular micro-groove 271 can provide a certain space for deformation of the sealing block 26. By providing the pressure relief channel 272, pressure balance in a vertical direction of the sealing block 26 is ensured.

As shown in Fig. 8, in some specific embodiments of the present disclosure, a push rod constraint hole 55 is further provided above the lower iron core 50, and an end of the upper push rod 90 close to the lower iron core 50 extends into the push rod constraint hole 55 and is in guide fit with an inner wall of the push rod constraint hole 55.

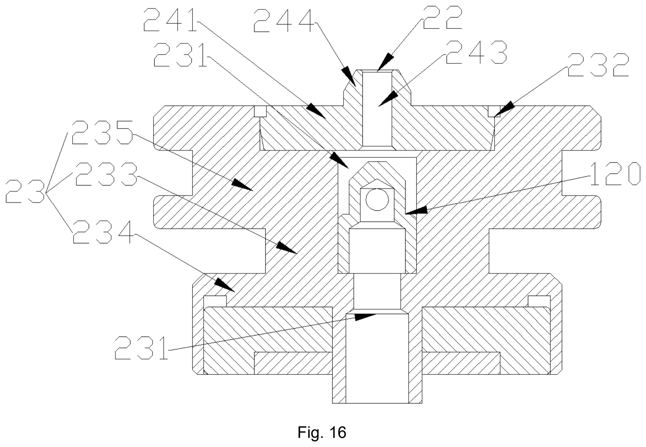

As shown in Fig. 16, the piston body 23 includes a first cylindrical section 235 connected to the pilot valve block 24, wherein the first cylindrical section 235 moves axially along an inner wall of the installation cavity 11; and an installation channel in communication with the guide channel 243 is provided inside the first cylindrical section 235, and the installation channel is a part of the piston channel 231. The piston body 23 further includes a diameter-reduced section 233 and a second cylindrical section 234, wherein the first cylindrical section 235, the diameter-reduced section 233 and the second cylindrical section 234 are sequentially connected, and the first cylindrical section 235 is away from the main valve port 17; the second cylindrical section 234 is close to the main valve port 17 and is used for controlling the opening or closing of the main valve port 17; and a circumferential size of the diameter-reduced section 233 is less than a circumferential size of the first cylindrical section 235 and a circumferential size of the second cylindrical section 234.

By configuring the piston body 23 to include the first cylindrical section 235 connected to the pilot valve block 24, a top of the piston body 23 is effectively configured as a cylindrical section structure facilitating processing and forming, such that an overall structure of the piston body 23 is relatively simple, and while effectively fixing the pilot valve block 24, processing and forming are more convenient.

By configuring the piston body 23 to include the first cylindrical section 235, the diameter-reduced section 233 and the second cylindrical section 234 sequentially connected, and configuring the circumferential size of the diameter-reduced section 233 to be less than the circumferential size of the first cylindrical section 235 and the circumferential size of the second cylindrical section 234, the structure of the piston body 23 is different from that of a conventional cylindrical piston, such that the overall structure is lighter, and the first cylindrical section 235 and the second cylindrical section 234 designed in sections can also be respectively adapted to a size of the inner wall of the installation cavity 11 and a size of the main valve port 17, which improves an adaptability effectively.

**In** some specific embodiments of the present disclosure, an installation channel is provided inside the first cylindrical section 235, and the installation channel is a part of the piston channel 231.

The content above merely relates to some embodiments of the present disclosure, and is not intended to limit the present disclosure. For a person skilled in the art, the present disclosure may have various modifications and changes. Any modifications, equivalent replacements, improvements and the like made within the spirit and principle of the present disclosure shall all fall within the scope of protection of the present disclosure.

## Claims

1. A solenoid valve, comprising:
a housing assembly (10), an installation cavity (11) being provided in the housing assembly (10); wherein the housing assembly (10) has a first flow port (12), a second flow port (13), and a main valve port (17) located between the first flow port (12) and the second flow port (13);
an on-off assembly (20), movably provided in the installation cavity (11); wherein the on-off assembly (20) is used for controlling opening or closing of the main valve port (17), so as to realize connection and disconnection between the first flow port (12) and the second flow port (13);
an upper iron core (40), movably provided in the installation cavity (11);
a lower iron core (50), movably provided in the installation cavity (11) and located below the upper iron core (40);
wherein the on-off assembly (20) is located below the lower iron core (50); the on-off assembly (20) has a through intermediate channel (21); an end of the intermediate channel (21) is in communication with the first flow port (12), and an other end of the intermediate channel (21) is a pilot valve port (22); and the lower iron core (50) is used for controlling opening and closing of the pilot valve port (22), so as to control a pressure difference between an upper part and a lower part of the on-off assembly (20); and
a lower push rod (60), movably provided in the installation cavity (11); wherein an end of the lower push rod (60) is in abutting fit with the upper iron core (40), and an other end of the lower push rod (60) is in abutting fit with the on-off assembly (20); and
an elastic member (80) and an upper push rod (90); wherein an end of the elastic member (80) abuts against the housing assembly (10), an other end of the elastic member (80) abuts against an end of the upper push rod (90), and an other end of the upper push rod (90) abuts against the lower iron core (50); and
a farthest distance between the lower iron core (50) and the pilot valve port (22) is an opening degree of the pilot valve port (22), and a maximum spacing between the upper iron core (40) and the lower iron core (50) is equal to the opening degree of the pilot valve port (22).

2. The solenoid valve according to claim 1, wherein the lower iron core (50) is provided with a constraint channel (54), and an inner wall of the constraint channel (54) is matched with the lower push rod (60), so as to constrain the lower push rod (60) to a reciprocating linear motion in a vertical direction; the lower iron core (50) is elastically arranged in the installation cavity (11) by the elastic member (80) and the upper push rod (90); a guide cavity (41) extending axially is provided inside the upper iron core (40); and both at least a part of the elastic member (80) and at least a part of the upper push rod (90) are located in the guide cavity (41), and the upper push rod (90) is in limiting fit with an inner wall of the guide cavity (41).

3. The solenoid valve according to claim 1, wherein
the housing assembly (10) comprises a valve seat (14) and a valve cover (15), wherein the first flow port (12), the second flow port (13) and the main valve port (17) are all provided on the valve seat (14); and an interior of the valve seat (14) and an interior of the valve cover (15) form at least a part of the installation cavity (11);
wherein the valve cover (15) is detachably connected to the valve seat (14) by threads; and
the valve seat (14) has a force-receiving surface (141), and the force-receiving surface (141) abuts against the valve cover (15); and a pressure generated by a threaded connection force between the valve cover (15) and the valve seat (14) on the force-receiving surface (141) lies within a pressure range born by the force-receiving surface (141).

4. The solenoid valve according to claim 3, wherein an annular constraint groove (151) is provided in a circumferential direction of a side wall of the valve cover (15); or an annular constraint groove (151) is provided in a circumferential direction of a side wall of the valve seat (14); and the solenoid valve further comprises an annular sealing ring (130), wherein the annular sealing ring (130) is provided in the annular constraint groove (151) and is in limiting fit with the annular sealing ring (130), and the annular sealing ring (130) is matched with an inner wall of the valve seat (14) so as to seal the installation cavity (11).

5. The solenoid valve according to claim 3, wherein the valve seat (14) is further provided with a positioning groove, the positioning groove surrounds a circumferential direction of the main valve port (17); and the solenoid valve further comprises a buffer spring, an end of the buffer spring is arranged in the positioning groove and is in limiting fit with the positioning groove, and an other end of the buffer spring abuts against the on-off assembly (20) so as to buffer an impact of the on-off assembly (20) on the valve seat (14).

6. The solenoid valve according to claim 3, wherein the solenoid valve further comprises an installation seat (140), wherein the installation seat (140) is detachably connected to the valve seat (14) by threads; a valve seat cavity (142) is provided inside the valve seat (14), and the first flow port (12), the second flow port (13) and the main valve port (17) are respectively in communication with the valve seat cavity (142); a cavity (1401), and a first flow channel (1402) and a second flow channel (1403) which are respectively in communication with the cavity (1401) are provided inside the installation seat (140); a threaded mating section (144) is provided in a middle of the valve seat (14), and the threaded mating section (144) is in threaded connection with an inner wall of the cavity (1401); a limiting surface (1404) is provided inside the cavity (1401), and the limiting surface (1404) abuts against the valve seat (14) to axially limit the valve seat (14); and the first flow channel (1402) is in communication with the second flow port (13), and the second flow channel (1403) is in communication with the first flow port (12).

7. The solenoid valve according to claim 1, wherein
the housing assembly (10) comprises a sleeve (16) and a valve cover (15), and interiors of the sleeve (16) and the valve cover (15) form at least a part of the installation cavity (11);
wherein an end of the sleeve (16) is fixed on the valve cover (15) by laser welding.

8. The solenoid valve according to claim 7, wherein a part of the sleeve (16) connected to the valve cover (15) is of a flared structure, the flared structure comprises a frustoconical curved section (163) and a straight section (162) connected to each other, an opening size of an end of the frustoconical curved section (163) towards the main valve port (17) is greater than an opening size of an end of the frustoconical curved section away from the main valve port (17), and the straight section (162) is connected to the end of the frustoconical curved section (163) having a larger opening size; an inner wall of the valve cover (15) is provided with a frustoconical mating section, and a frustoconical curved surface (161) on the frustoconical curved section (163) is in abutting fit with a frustoconical fit surface (152) of the frustoconical mating section; and the straight section (162) and the valve cover (15) are welded in a laser penetration welding manner.

9. The solenoid valve according to claim 1, wherein the solenoid valve further comprises an elastic gasket (100), an end of the lower iron core (50) close to the upper push rod (90) is provided with a constraint groove (51), at least a part of the elastic gasket (100) is arranged in the constraint groove (51) and is in limiting fit with the constraint groove (51); and a minimum axial size of the elastic gasket (100) is not greater than an axial size of the constraint groove (51), such that the upper iron core (40) and the lower iron core (50) can be attached together.

10. The solenoid valve according to claim 9, wherein the elastic gasket (100) is sleeved on a circumferential outer wall of the upper push rod (90); the elastic gasket (100) is a disc spring; and the disc spring is made of a metal material.

11. The solenoid valve according to claim 1, wherein the solenoid valve further comprises a rubber gasket, and the rubber gasket is provided between the upper iron core (40) and an inner wall of the installation cavity (11), so as to buffer an impact of the upper iron core (40) on the inner wall of the installation cavity (11).

12. The solenoid valve according to claim 1, wherein a guide cavity (41) extending axially and a fit hole (42) in communication with the guide cavity (41) are provided inside the upper iron core (40); the upper push rod (90) comprises a guide section (91) and a mating section (92) which are connected in sequence, wherein the guide section (91) is arranged in the guide cavity (41) and is in guide fit with an inner wall of the guide cavity (41); the elastic member (80) is located in the guide cavity (41), an end of the elastic member (80) abuts against the housing assembly (10), and an other end of the elastic member (80) abuts against the guide section (91); a part of the mating section (92) is located in the guide cavity (41), and an other part extends out of the fit hole (42) and then abuts against the lower iron core (50); and a gap between the guide section (91) and the inner wall of the guide cavity (41) is smaller than a gap between the mating section (92) and an inner wall of the fit hole (42).

13. The solenoid valve according to claim 12, wherein the housing assembly (10) comprises a sleeve (16); an interior of the sleeve (16) is used for accommodating at least a part of the upper iron core (40) and at least a part of the lower iron core (50); a flow channel (43) in communication with the guide cavity (41) is further provided inside the upper iron core (40); the flow channel (43) and the mating section (92) are respectively located at two sides of the guide section (91); and the guide cavity (41) of the upper iron core (40) is in communication with a gap between the upper iron core (40) and the sleeve (16) through the flow channel (43).

14. The solenoid valve according to claim 1, wherein
the on-off assembly (20) comprises a piston body (23) and a pilot valve block (24) fixedly provided on the piston body (23); the pilot valve port (22) is provided on the pilot valve block (24), and at least a part of the intermediate channel (21) is provided in the piston body (23);
the solenoid valve further comprises a check valve (120); the check valve (120) is movably provided in the intermediate channel (21); and
the pilot valve block (24) is fixed on the piston body (23) by welding.

15. The solenoid valve according to claim 14, wherein the pilot valve block (24) is fixed on a top end face of the piston body (23) by welding; or, a pilot valve groove (232) is provided on a top end face of the piston body (23), and the pilot valve block (24) is fixed in the pilot valve groove (232) by welding and is in limiting fit with an inner wall of the pilot valve groove (232).

16. The solenoid valve according to claim 14, wherein the intermediate channel (21) comprises a piston channel (231) provided in the piston body (23) and a guide channel (243) provided in the pilot valve block (24); the check valve (120) is located in the piston channel (231), the check valve (120) blocks a lower opening of the guide channel (243), and an upper opening of the guide channel (243) is the pilot valve port (22); and at least a part of the pilot valve block (24) is located in the piston channel (231), and an outer wall of the pilot valve block (24) and an inner wall of the piston channel (231) are fixed by welding.

17. The solenoid valve according to claim 14, wherein the intermediate channel (21) comprises a piston channel (231) provided in the piston body (23) and a guide channel (243) provided in the pilot valve block (24); the check valve (120) is internally provided with a first flow section (121) and a second flow section (122) in communication with each other in sequence from bottom to top, a radial size of the first flow section (121) is greater than a radial size of the second flow section (122), a side surface of the second flow section (122) is provided with a through hole (123), and the through hole (123) achieves communication between the second flow section (122) and the piston channel (231); and a wall thickness of the first flow section (121) is equal to a wall thickness of the second flow section (122).

18. The solenoid valve according to claim 17, wherein an inner wall of the piston channel (231) is provided with a step surface, and the step surface is used for limiting an axial movement of the check valve (120); the check valve (120) comprises, from bottom to top, a first cylindrical portion (124), a second cylindrical portion (125) and a frustoconical portion (126) which are sequentially connected, in which the first flow section (121) is located inside the first cylindrical portion (124), the second flow section (122) is located inside the second cylindrical portion (125); the through hole (123) passes through the second cylindrical portion (125); the first cylindrical portion (124) can be in abutting fit with the step surface; and the frustoconical portion (126) abuts against or separates from a lower opening of the guide channel (243) so as to open or close the pilot valve port (22).

19. The solenoid valve according to claim 14, wherein the pilot valve block (24) comprises an insertion section (241) fitting the piston body (23) and a pilot valve section (244) internally provided with the pilot valve port (22), and a diameter of the insertion section (241) is larger than a diameter of the pilot valve section (244).

20. The solenoid valve according to claim 1, wherein
the on-off assembly (20) comprises a piston body (23) and a pilot valve block (24) provided on the piston body (23);
the intermediate channel (21) comprises a piston channel (231) provided in the piston body (23) and a guide channel (243) provided in the pilot valve block (24); an upper opening of the guide channel (243) is the valve guide port (22); and the piston channel (231) is in communication with the first flow port (12);
the piston body (23) comprises a first cylindrical section (235) connected to the pilot valve block (24), wherein the first cylindrical section (235) moves axially along an inner wall of the installation cavity (11); and an installation channel in communication with the guide channel (243) is provided inside the first cylindrical section (235), and the installation channel is a part of the piston channel (231);
the solenoid valve further comprises a check valve (120), wherein at least a part of the check valve (120) is movably provided in the installation channel, the check valve (120) is used for blocking an opening of the guide channel (243) below the valve guide port (22); and
the pilot valve block (24) is fixed on the piston body (23) by threaded connection.

21. The solenoid valve according to claim 20, wherein at least a part of the pilot valve block (24) is located in the installation channel, and the check valve (120) is located outside the guide channel (243); or, at least a part of the guide valve block (24) is located in the installation channel, and the check valve (120) is located in the guide channel (243); and a part of the pilot valve block (24) located in the installation channel is in threaded connection with an inner wall of the installation channel.

22. The solenoid valve according to claim 20, wherein the pilot valve block (24) comprises an insertion section (241), a limiting section (242) and a pilot valve section (244) which are sequentially connected, wherein the limiting section (242) is located outside the piston body (23); the insertion section (241) is located in the piston body (23) and is in threaded fit with an inner wall of the piston channel (231); the guide channel (243) passes through the insertion section (241), the limiting section (242) and the pilot valve section (244), and the pilot valve port (22) is located on the pilot valve section (244); and an outer wall of the limiting section (242) abuts against an outer wall of the piston body (23) in an axial direction so as to achieve axial limiting.

23. The solenoid valve according to claim 22, wherein a sharp corner structure is provided on the outer wall of the limiting section (242), and the sharp corner structure is in abutting fit with the outer wall of the piston body (23).
